# EUROPEAN PATENT SPECIFICATION

(11) **EP 1 421 248 B1**
(45) Date of publication and mention of the grant of the patent: **08.03.2006**
(21) Application number: 02794560.9
(22) Date of filing: 06.08.2002
(51) Int. Cl.: E05F 15/14, F16H 19/00, F16H 55/26

(54) **SLIDING GATE MOVEMENT SYSTEM**
BEWEGUNGSSYSTEM FÜR SCHIEBETOR
SYSTEME DE DEPLACEMENT DE PORTE COULISSANTE

(30) Priority: 07.08.2001 IT MI20011738
(43) Date of publication of application: 26.05.2004
(73) Proprietor: Prastel SPA, 40138 Bologna (IT)
(72) Inventor: CELANI, Luigi, 00119 Ostia Antica, Roma (IT)
(74) Representative: Petruzziello, Aldo
(86) International application number: PCT/EP2002/008750
(87) International publication number: WO 2003/014507

(56) References cited:
- FR-A- 571 711
- US-A- 647 491
- US-A- 3 720 115
- US-A- 4 610 109
- US-A- 5 170 585

## Description

The present invention relates to a sliding gate movement system.

A sliding gate normally comprises a gate proper mounted on wheels with ball or roller bearings, in order to translate on a guide rail or a track, along a straight route, to close and open a passage.

Movement devices to move the sliding gate comprising a gear mechanism consisting of a coupling between a rack and a crown gear are known in the art. The rack is integral with the gate and positioned horizontally, for almost the entire length of the gate, and the crown gear is connected to a gear reduction unit of an electric motor fitted to a support integral with the floor. The axis of the crown gear is substantially at right angles to the horizontal direction of gate translation. US-A-4 610 109 discloses such a sliding gate having the features of the preamble of claim 1.

This way, the motor drives the gear reduction unit that causes the crown gear to turn and the teeth of this to mesh into the grooves of the rack, pushing the rack teeth. As a result the rotating gear movement causes the rack to translate and, because this is integral with the gate, it drags in translation the gate.

Sliding gates are generally very heavy. Some gates can achieve a weight of 1500 kg. For this reason, and because the teeth of the crown gear operate directly by frontal thrust on the teeth of the rack, to cause rotary rack to move a very high torque is needed. Consequently the interposition of gear reduction mechanisms between the driving shaft and crown gear must be provided.

Other sliding gate movement systems are known, whereby the gate is pulled by a chain or belt driven by a pulley or motorised crown gear. In this case as well, gear reduction units should be provided between the driving shaft and the belt drive pulley.

According to the state of the art, sliding gate movement systems have a number of drawbacks.

These movement systems are too expensive and cumbersome because a reduction mechanism is provided between the driving shaft and the crown gear that operates on the gate rack or chain. Furthermore, the gear reduction mechanism is often subject to wear by friction and requires maintenance and frequent replacements.

For this reason, so as not to oversize the gear mechanism, in sliding gates, according to the state of the art, high-power electric motors are used such as A.C. motors powered directly from the A.C. mains.

Nevertheless, the provision of an A.C. motor implies supplying the motor by means of power cables, passing through the gate, carrying the mains voltage (220 ÷ 230 Volt). Consequently, in the case of any power cable being uncovered, this would discharge onto the gate which, being normally made of metal, would become a good conductor, with hazardous consequences for anyone accidentally touching the gate.

Furthermore, any interruption in the mains power supply would prevent the motor working and therefore also gate movement.

One object of the present invention is to eliminate the drawbacks of the known technique by providing an inexpensive and simple device for sliding gate movement

Another object of the present invention is to provide such a device for sliding gate movement that is reliable and safe for the user.

Another object of the present invention is to provide such a device for sliding gate movement that is both versatile and suitable for fitting to sliding gates currently on the market.

These objects are achieved in accordance with the invention with the characteristics listed on the attached independent claim 1.

Advantageous embodiments of the invention appear from the dependent claims.

The movement system according to the invention is suitable for moving a sliding gate mounted on wheels running on a straight rail. The movement system comprises:
- a straight rack integral with the gate,
- engaging means for engaging the rack to cause horizontal movement of the gate, and
- activating means for moving the means of engagement.

The particular characteristic of the present invention is represented in that said engaging means comprise a wheel having a rotation axis substantially parallel to the horizontal direction of gate movement. Such wheel has on its lateral circumferential outer surface engaging elements able to engage the rack to cause rack to translate.

The engaging elements are preferably represented by a thread or radial pins arranged along a helical path. This way an excellent gear reduction ratio is achieved between the wheel and the rack. As a consequence, only a very low torque is needed to start the rotation of the wheel that engages the rack. For this reason, the wheel can be driven in rotation by means of a driving shaft that directly engages the wheel without the need to interpose gear reduction mechanisms.

Furthermore, with this movement system, a D.C. motor can be used with big advantages in terms of costs, overall dimensions and safety.

Further characteristics of the invention will become apparent from the following detailed description, referred to purely exemplary and therefore not restrictive embodiments, illustrated on the attached drawings, in which:
Fig. 1 is a plan view from above, schematically showing the sliding gate movement system according to the invention;
Fig. 2 is an axial section view of a worm screw being part of the movement system according to the invention;
Fig. 3 is a side view from the right of Fig. 2;
Fig. 4 is a partial axial section view showing the worm screw fitted on its support and coupled to the driving shaft;
Fig. 5 is a perspective view schematically showing a second form of embodiment of the sliding gate movement system according to the invention;
Fig. 6 is a radial section view taken along a pin of the wheel of the movement device according to the second form of embodiment of the invention;
Fig. 7 is a section view showing a different embodiment of a gate rack for use with the gate movement system according to the invention;
Fig. 8 is a partial axial section view showing a different embodiment of the motor that drives the gate movement system according to the invention.

With the aid of the illustrations, the sliding gate movement system according to the invention is described.

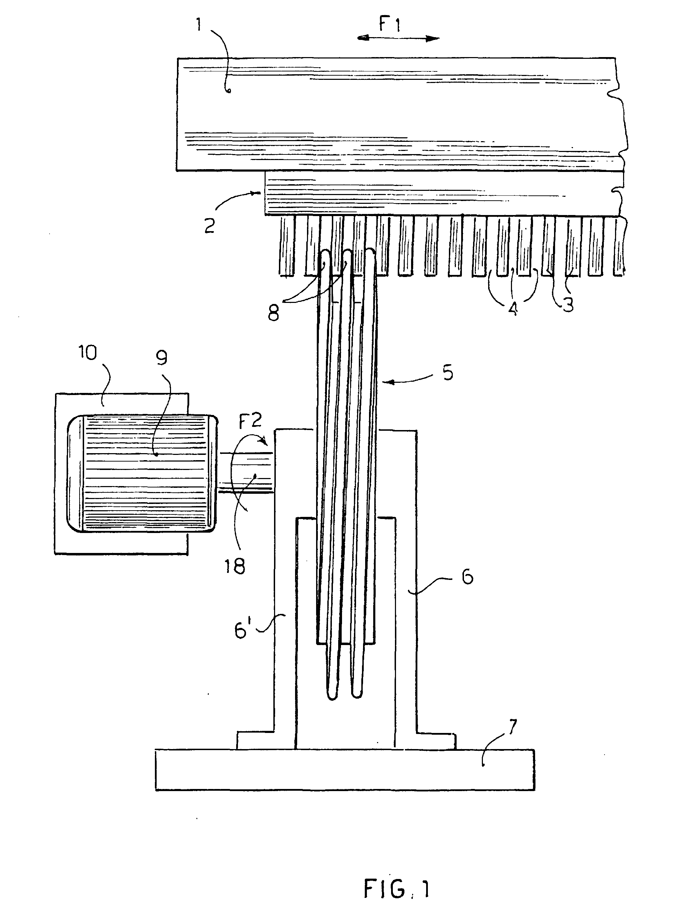

For now with reference to Figures 1 - 4, a first embodiment of the invention is described.

Fig. 1 schematically shows a gate, indicated by reference number 1. The gate 1 is mounted on wheels that can rotate along straight rails, in horizontal direction of the double arrow F1. To the gate 1 is integrally mounted a rack 2, of linear shape and which extends for almost the entire length of gate 1.

Rack 2 comprises a plurality of teeth 3 separated from each other by a plurality of grooves 4. By way of example, the size of each groove 4 is about 4 mm and the pitch between one tooth 3 and the next is about 12 mm and the inclination of the cutting angle of each tooth 3 is around 1.0941 degrees.

A worm screw 5 is rotatably mounted on two support brackets 6, 6' supported by a frame 7 integral with the ground. The worm screw 5 is positioned so its axis of rotation is kept substantially parallel to the horizontal direction of movement of the gate 1. This way, the threads 8 of the outer threading of worm screw 5 engage the grooves 4 of rack 2.

The worm screw 5 is rotated around its own axis by an electric motor 9, supported by a support frame 10 integral with the ground. Because the threads 8 of worm screw 5 engage the grooves 4 of rack 2, a rotation of worm screw 5 in the direction of arrow F2 or in the opposite direction causes gate 1 to translate in the direction of arrow F1. In fact, sliding over the side surface of threads 8 on the cutting surface of teeth 3 which is inclined by about 1 degree, causes rack 2 to move forward.

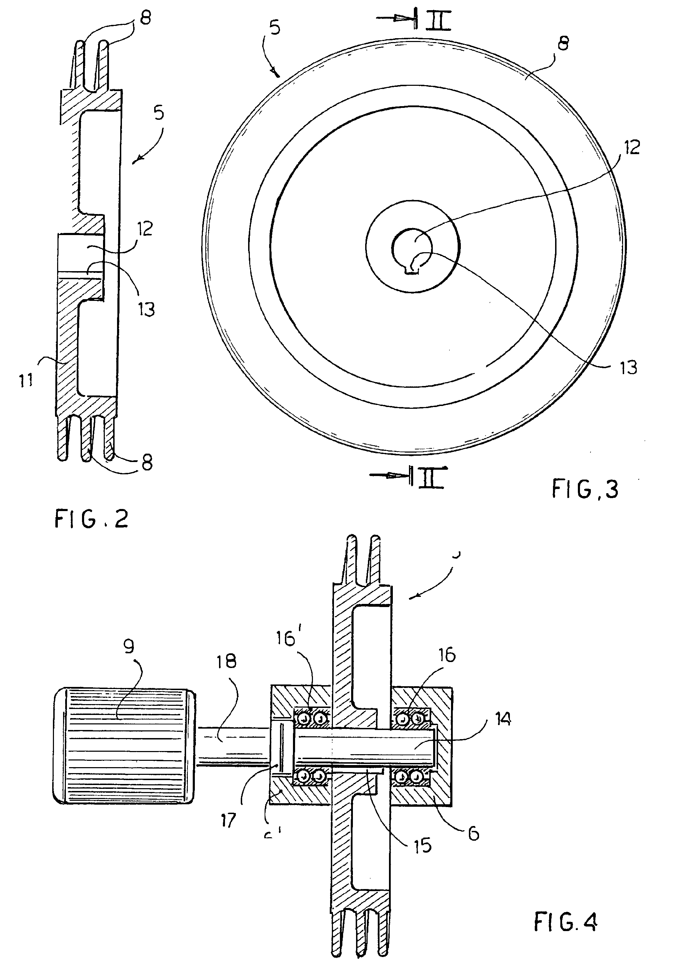

As shown in Figures 2 and 3, worm screw 5 comprises a wheel 11 with a substantially cylindrical body, with an external helical thread formed on the side surface. By way of example a right-handed thread is used with a 12 mm pitch the same as the pitch of teeth 3 of rack 2. The thickness of threads 8 is around 3.6 mm, meaning slightly below the size of grooves 4 of rack 2, so threads 8 can engage grooves 4 of rack 2. The total outer diameter of the worm screw is about 220 mm, but this can be increased or reduced in accordance with the desired reduction ratio.

At the centre of the cylindrical body of wheel 11 is a through hole 12 with longitudinal groove 13 to receive a driving shaft for integrally rotating with wheel 11. As Fig. 4 shows, inside axial hole 12 a shaft 14 is fitted providing a protruding part 15 that engages groove 13. The shaft 14 is supported in rotation by bearings 16, 16' arranged in support brackets 6, 6' respectively. Shaft 14 can be the shaft of motor 9, or can be linked to shaft 18 of motor 9 by a coupling 17, without the need to use gear reduction mechanisms.

By using an arrangement like that illustrated above to move the gate 1, the kinematic performance is mainly affected by the sliding frictions between the threads 8 of worm screw 5 and the teeth 3 of the rack. Nevertheless, in conformity with the pitch of the thread used, a desired reduction ratio can be obtained that allows using the motor in direct drive on the worm screw without using gear reduction mechanisms.

Clearly, in place of a worm screw having a continuous helical thread, a worm screw can be used with a discontinuous helical thread, meaning consisting of a section of thread arranged along a helical path, able to engage grooves 4 of rack 2.

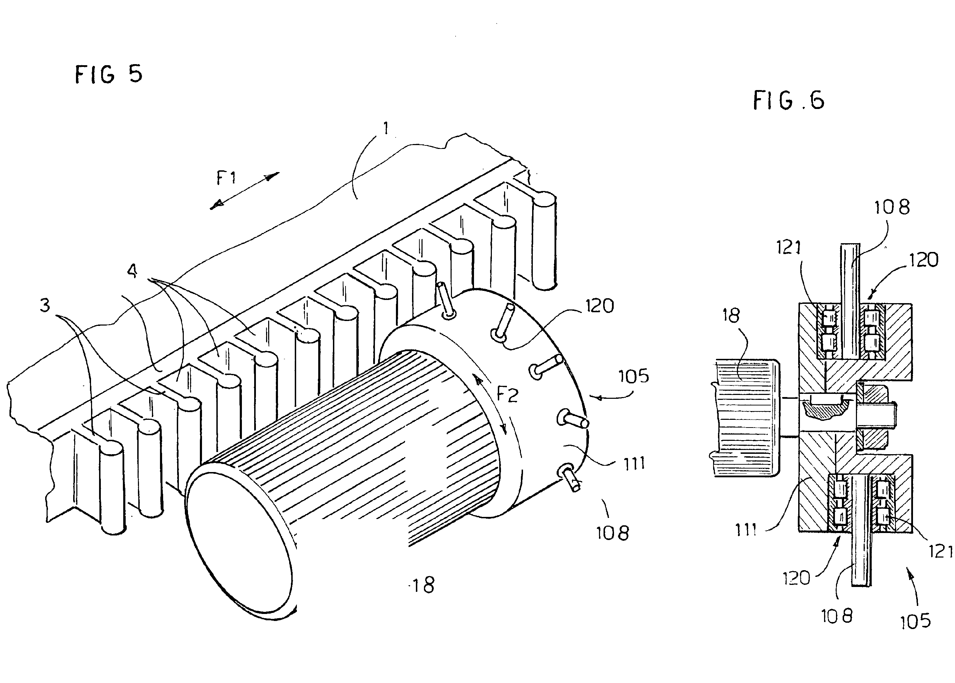

With reference to Figures 5 and 6 is shown a second embodiment of the sliding gate movement system according to the invention, in which elements identical or corresponding to those already described with reference to the first embodiment are indicated with the same reference numbers and their detailed description is omitted.

Fig. 5 shows a rack 2 integral with gate 1 and a driving shaft 18 keyed to a wheel or drum 105 arranged with a rotation axis substantially parallel to the direction of movement of gate 1. Wheel 105 is substantially different from wheel 5 in the first embodiment.

Wheel 105 comprises a cylindrical body 111 providing a plurality of cylindrical pins 108 radially protruding from the side surface of cylindrical body 111. The cylindrical pins 108 follow a helical path along the side surface of the cylindrical body 111. Each pin 108 is rotatingly mounted around its own axis, on the wheel body, by means of a cage 120 of rollers 121 better shown in Fig. 6. Naturally, rollers 121 can be substituted with ball bearings.

The outer diameter of each pin 108 is below the size of grooves 4 of rack 2, so pins 108 can engage grooves 4 of rack 2. Consequently, rotation of wheel 105 in the direction of arrows F2 causes gate 1 to translate in the direction of arrows F1. In this case, between pins 108 of wheel 105 and teeth 3 of rack 2 there is a revolving friction which, as is known, is much lower than sliding friction. Consequently, this embodiment is particularly advantageous in the event of wanting to minimise the torque supplied by the motor.

By means of calculations and experimental tests, selecting the best pitch of the helical route of pins 108 and using materials with low coefficient of friction, the applicant has seen that to move a gate weighing about 1,500 Kg all that is required, with a high safety margin, is an electric motor with a power input of around 70 W.

Accordingly, a D.C, electric motor can be used powered by a voltage with a range between 12 and 24 V. Consequently a power transformer will be provided in the motor control box that transforms the mains voltage into a D.C. voltage able to power the motor. Furthermore, the motor will be connected to a battery able to power it in the event of a mains power break.
This produces a number of advantages, such as:
- greater energy saving,
- smaller overall dimensions,
- lower motor and control electronics cost,
- greater safety in case of uncovered motor power wires,
- the possibility of an auxiliary battery to power the motor.

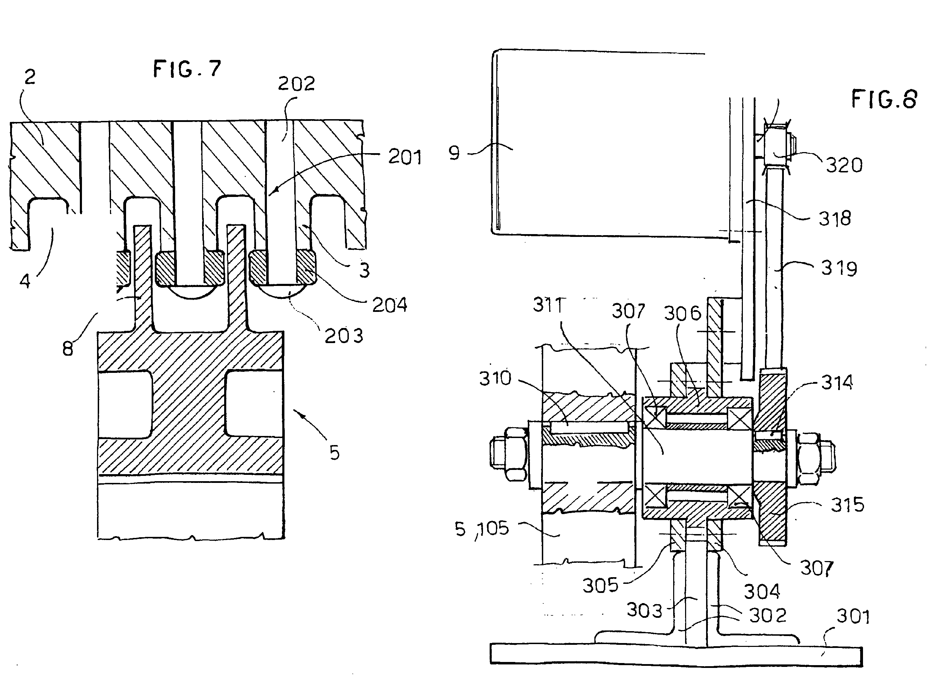

Fig. 7 shows an improved rack 2 integral with the gate, able to further reduce friction with the worm screw movement system. In this variation of embodiment, in each tooth 3 of the rack a roller 204 is fitted revolving with a rotation axis at right angles to the rotation axis of the wheel 5, 105 of the worm screw. Rollers 204 are preferably made of hard plastic such as polyamide.

To be more exact, each roller 204 is rotatably mounted on a respective pin 202 that engages, in a forced coupling relationship, a cylindrical hole 201 formed in each tooth 3 of the rack. The pin 202 has an enlarged head 203 to restrain roller 204 during axial movement between the pin head and the end of tooth 3 of the rack.

This way, rotation of worm screw 5 causes a revolving friction of threads 8 with revolving rollers 204 of the rack.

Even though the Illustrations show motor 9 with driving shaft 18 in axis with the worm screw 5 or wheel 105, as shown in Fig. 8, a variation can be provided in which motor 9 is arranged above the worm screw 5 or wheel 105 that engages the gate rack.

In this case on a base 301 two brackets 302 are mounted that support a vertical support 303, on which are fitted a further two flanges 305, 304 that support a hub 306. On the flange 304, above hub 306 an adjustable bracket 318 is mounted that supports a motor 9. The driving shaft 18 of motor 9 bears a pinion 320 that causes a timing belt 319 to rotate and this belt causes a pulley 315 to rotate.

The pulley 315 is keyed on an axis 311 by means of a key 314. The axis 311 is rotatably supported in the hub 306, by means of bearings 307. The other end of the axis 311 is keyed by means of a key 310 to the worm screw 5 or to the wheel 105. This way, motor 9 is above worm screw 5 or wheel 105.

Numerous detail changes can be made to these embodiments of the invention, all within the possibilities of a skilled in the art, and which in any case fall within the scope of the invention expressed by the attached claims.

## Claims

1. **A sliding gate with a** sliding gate movement system, the gate (1) being mounted on wheels sliding on a straight rail, the **sliding gate with a** movement system comprising:
- a straight rack (2) integral with gate (1), comprising a plurality of teeth (3) separated from each other by a plurality of grooves (4),
- engaging means (5, 105) for engaging said rack (2) to cause the horizontal translation of said gate, and
- activating means (9) for moving said engaging means (5, 105),
**characterised in that** said engaging means (5, 105) comprise a wheel or drum (11, 111) having an axis substantially parallel to the horizontal direction of translation of the gate and having engaging elements (8, 108), arranged on its lateral circumferential outer surface, to engage with said rack (2).

2. **A sliding gate with a sliding gate** movement system as claimed in claim 1, **characterised in that** said engaging means comprise a worm screw (5) and said engaging elements are the threads (8) of the outer thread of said worm screw and said teeth (3) of the rack are arranged with a slightly angled cutting surface.

3. **A sliding gate with a** sliding gate movement system as claimed in claim 2, **characterised in that** the pitch of the thread of worm screw (5) is substantially the same as the pitch of teeth (3) of the rack and the thickness of each thread (8) of worm screw (5) is slightly below the size of grooves (4) of the rack.

4. **A sliding gate with a sliding gate** movement system as claimed in claim 1, **characterised in that** said engaging elements are cylindrical pins (108), protruding radially from the lateral circumferential surface of said wheel (111) and are arranged in a helical path on the lateral circumferential surface of said wheel (111).

5. **A sliding gate with a sliding gate** movement system as claimed in claim 4, **characterised in that** said cylindrical pins (108) are mounted revolving around their axis.

6. **A sliding gate with a sliding gate** movement system as claimed in claim 5, **characterised in that** said cylindrical pins (108) are fitted in cages (120) of rollers (121) or bearings.

7. **A sliding gate with a sliding gate** movement system as claimed in any of the previous claims, **characterised in that** said wheel (11, 111) is mounted revolving around its own axis on support means (6, 6') made integral with the ground.

8. **A sliding gate with a sliding gate** movement system as claimed in claim 7, **characterised in that** ball bearings (16, 16') are positioned between said support means and said wheel (11, 111) to support the latter during rotation.

9. **A sliding gate with a sliding gate** movement system as claimed in any of the previous claims, **characterised in that** in at least some of said teeth (3) of said rack, rollers (204) are rotatably mounted with a rotation axis substantially at right angles to said wheel (11) so as to generate a rolling friction when engaged with said engaging means (8) of said wheel (11).

10. **A sliding gate with a sliding gate** movement system as claimed in any of the previous claims, **characterised in that** said activating means are an electric motor (9) the shaft (18) of which is directly linked to said wheel (11, 111) to rotate it.

11. **A sliding gate with a sliding gate** movement system as claimed in any of the claims from 1 to 9, **characterised in that** said electric motor (9) is arranged with its shaft (18) parallel to axis (311) of said engaging means (5, 105) and a belt drive (319) is provided for transmitting movement from said motor (9) to said axis.

12. A sliding gate with a sliding gate movement system as claimed in claim 10 or 11, **characterised in that** said electric motor is a D.C. motor powered by direct current in the 12 volt ÷ 24 volt range, from a power transformer able to transform A.C. mains voltage into direct current.

13. **A sliding gate with a sliding gate** movement system as claimed in claim 12, **characterised in that** said D.C. electric motor (9) is connected to a battery so it can also be powered when mains power breaks occur.

## Patentansprüche

1. Schiebetor mit einem Schiebetorbewegungssystem, wobei das Tor (1) auf Rädern montiert ist und auf einer geraden Schiene gleitet, wobei das Schiebetor mit einem Schiebetorbewegungssystem Folgendes umfasst:
- eine gerade Schiene (2), die mit dem Tor (1) integral ausgebildet ist und mehrere Zähne (3) umfasst, die durch mehrere Ausnehmungen (4) voneinander getrennt sind;
- Eingriffnahmemittel (5, 105) zur Eingriffnahme der genannten Schiene (2), um eine horizontale Verschiebung des Tores zu bewirken; und
- Aktivierungsmittel (9) zum Bewegen des genannten Eingriffnahmemittel (5, 105),
**dadurch gekennzeichnet, dass** die Eingriffnahmemittel (5, 105) ein Rad oder eine Trommel (11, 111) umfassen, das bzw. die eine Achse hat, die im Wesentlichen parallel zur horizontalen Verschiebungsrichtung des Tores verläuft, und Eingriffnahmeelemente (8, 108) aufweist, die an seiner bzw. ihrer seitlichen umfänglichen Außenfläche angeordnet sind, um die genannte Schiene (2) in Eingriff zu nehmen.

2. Schiebetor mit einem Schiebetorbewegungssystem nach Anspruch 1, **dadurch gekennzeichnet, dass** die genannten Eingriffnahmemittel eine Schnecke (5) umfassen und die genannten Eingriffnahmeelemente die Gewindegänge (8) des äußeren Gewindes der Schnecke sind und die Zähne (3) der Schiene mit einer leicht angewinkelten Schnittfläche angeordnet sind.

3. Schiebetor mit einem Schiebetorbewegungssystem nach Anspruch 2, **dadurch gekennzeichnet, dass** die Ganghöhe des Gewindes der Schnecke (5) im Wesentlichen die gleiche ist wie die Ganghöhe der Zähne (3) der Schiene und die Dicke jedes Gewindeganges (8) der Schnecke (5) ein wenig kleiner ist als die Größe der Ausnehmungen (4) der Schiene.

4. Schiebetor mit einem Schiebetorbewegungssystem nach Anspruch 1, **dadurch gekennzeichnet, dass** die Eingriffnahmeelemente zylindrische Stifte (108) sind, die radial von der seitlichen Umfangsfläche des Rades (111) vorstehen und schraubenförmig entlang der seitlichen Umfangsfläche des Rades (111) angeordnet sind.

5. Schiebetor mit einem Schiebetorbewegungssystem nach Anspruch 4, **dadurch gekennzeichnet, dass** die zylindrischen Stifte (108) um ihre eigene Achse drehbar angebracht sind.

6. Schiebetor mit einem Schiebetorbewegungssystem nach Anspruch 5, **dadurch gekennzeichnet, dass** die genannten zylindrischen Stifte (108) in Käfigen (120) von Rollen (121) oder Lagern angeordnet sind.

7. Schiebetor mit einem Schiebetorbewegungssystem nach einem der vorangehenden Ansprüche, **dadurch gekennzeichnet, dass** das genannte Rad (11, 111) um seine eigene Achse drehbar an Trägermitteln (6, 6'), die integral mit dem Boden ausgebildet sind, angebracht ist.

8. Schiebetor mit einem Schiebetorbewegungssystem nach Anspruch 7, **dadurch gekennzeichnet, dass** Kugellager (16, 16') zwischen den genannten Trägermitteln und dem genannten Rad (11, 111) angeordnet sind, um das Rad (11, 111) während der Drehung zu stützen.

9. Schiebetor mit einem Schiebetorbewegungssystem nach einem der vorangehenden Ansprüche, **dadurch gekennzeichnet, dass** in wenigstens einigen der Zähne (3) der genannten Schiene Rollen (204) drehbar montiert sind, deren Drehachse im Wesentlichen im rechten Winkel zu dem genannten Rad (11) verläuft, so dass bei Eingriffnahme mit den Eingriffnahmemitteln (8) des Rades (11) eine Rollreibung entsteht.

10. Schiebetor mit einem Schiebetorbewegungssystem nach einem der vorangehenden Ansprüche, **dadurch gekennzeichnet, dass** das Aktivierungsmittel ein Elektromotor (9) ist, dessen Welle (18) direkt mit dem genannten Rad (11, 111) verbunden ist, um es zu drehen.

11. Schiebetor mit einem Schiebetorbewegungssystem nach einem der Ansprüche 1 bis 9, **dadurch gekennzeichnet, dass** der Elektromotor (9) so angeordnet ist, dass seine Welle (18) parallel zur Achse (311) der Eingriffnahmemittel (5, 105) verläuft, und dass ein Riementrieb (319) vorhanden ist, um eine Bewegung von dem Motor (9) zu der Achse zu übertragen.

12. Schiebetor mit einem Schiebetorbewegungssystem nach Anspruch 10 oder 11, **dadurch gekennzeichnet, dass** der genannte Elektromotor ein Gleichstrommotor ist, der durch Gleichstrom im Bereich von 12 Volt bis 24 Volt aus einem Stromtransformator betrieben wird, der Netzwechselspannung in Gleichstrom umwandeln kann.

13. Schiebetor mit einem Schiebetorbewegungssystem nach Anspruch 12, **dadurch gekennzeichnet, dass** der Gleichstrommotor (9) an eine Batterie angeschlossen ist, so dass er auch dann mit Strom versorgt werden kann, wenn es zu einem Netzstromausfall kommt.

## Revendications

1. Porte coulissante avec système de mouvement de porte coulissante, la porte (1) étant montée sur roues coulissant su
r un rail droit, la porte coulissante avec système de mouvement comprenant :
- une crémaillère droite (2) faisant partie intégrale de la porte (1), comprenant une pluralité de dents (3) séparées l'une de l'autre par une pluralité de gorges (4),
- des moyens de mise en prise (5, 105) pour la mise en prise de ladite crémaillère (2) pour provoquer la translation horizontale de ladite porte, et
- des moyens d'activation (9) pour déplacer lesdits moyens de mise en prise (5, 105),
**caractérisée en ce que** lesdits moyens de mise en prise (5, 105) comprennent une roue ou un tambour (11, 111) ayant un axe sensiblement parallèle à la direction horizontale de translation de la porte et ayant des éléments de mise en prise (8, 108) agencés sur sa surface extérieure circonférentielle latérale pour se mettre en prise avec ladite crémaillère (2).

2. Porte coulissante avec système de mouvement de porte coulissante selon la revendication 1, **caractérisée en ce que** lesdits moyens de mise en prise comprennent une vis sans fin (5) et lesdits éléments de mise en prise sont les filets (8) du filetage extérieur de ladite vis sans fin et lesdites dents (3) de la crémaillère sont agencées avec une surface de coupure en angle léger.

3. Porte coulissante avec système de mouvement de porte coulissante selon la revendication 2, **caractérisée en ce que** le pas du filetage de la vis sans fin (5) est sensiblement le même que le pas des dents (3) de la crémaillère et l'épaisseur de chaque filet (8) de la vis sans fin (5) est légèrement inférieure à la taille des gorges (4) de la crémaillère.

4. Porte coulissante avec système de mouvement de porte coulissante selon la revendication 1, **caractérisée en ce que** lesdits éléments de mise en prise sont des broches cylindriques (108), faisant saillie de manière radiale par rapport à la surface circonférentielle latérale de ladite roue (111) et sont agencées sur un chemin hélicoïdal sur la surface circonférentielle latérale de ladite roue (111).

5. Porte coulissante avec système de mouvement de porte coulissante selon la revendication 4, **caractérisée en ce que** lesdites broches cylindriques (108) sont montées en tournant autour de leur axe.

6. Porte coulissante avec système de mouvement de porte coulissante selon la revendication 5, **caractérisée en ce que** lesdites broches cylindriques (108) sont adaptées dans des cages (120) de rouleaux (121) ou de roulements.

7. Porte coulissante avec système de mouvement de porte coulissante selon l'une quelconque des revendications précédentes, **caractérisée en ce que** ladite roue (11, 111) est montée en tournant autour de son propre axe sur des moyens de support (6, 6') rendus intégraux avec le sol.

8. Porte coulissante avec système de mouvement de porte coulissante selon la revendication 7, **caractérisée en ce que** des roulements à bille (16, 16') sont positionnés entre lesdits moyens de support et ladite roue (11, 111) pour supporter ladite roue pendant la rotation.

9. Porte coulissante avec système de mouvement de porte coulissante selon l'une quelconque des revendications précédentes, **caractérisée en ce que** dans au moins certaines desdites dents (3) de ladite crémaillère, des rouleaux (204) sont montés en pouvant tourner avec un axe de rotation sensiblement à angle droit avec ladite roue (11) de manière à générer un frottement de roulement lorsqu'ils sont mis en prise avec lesdits moyens de mise en prise (8) de ladite roue (11).

10. Porte coulissante avec système de mouvement de porte coulissante selon l'une quelconque des revendications précédentes, **caractérisée en ce que** lesdits moyens d'activation sont un moteur électrique (9) dont l'arbre (18) est directement lié à ladite roue (11, 111) pour la faire tourner.

11. Porte coulissante avec système de mouvement de porte coulissante selon l'une quelconque des revendications 1 à 9, **caractérisée en ce que** ledit moteur électrique (9) est agencé avec son arbre (18) parallèle à l'axe (311) desdits moyens de mise en prise (5, 105) et un entraînement par courroie (319) est fourni pour transmettre le mouvement dudit moteur (9) au dit axe.

12. Porte coulissante avec système de mouvement de porte coulissante selon la revendication 10 ou 11, **caractérisée en ce que** ledit moteur électrique est un moteur CC alimenté en courant continu dans la plage de 12 V à 24 V par un transformateur électrique capable de transformer la tension du courant alternatif du secteur en courant continu.

13. Porte coulissante avec système de mouvement de porte coulissante selon la revendication 12, **caractérisée en ce que** ledit moteur électrique CC (9) est connecté à une batterie pour pouvoir être également alimenté en cas de coupure de courant du secteur.
